# EUROPÄISCHE PATENTSCHRIFT

(11) **EP 4 217 642 B1**
(45) Veröffentlichungstag und Bekanntmachung des Hinweises auf die Patenterteilung: **19.02.2025**
(21) Anmeldenummer: 21765627.1
(22) Anmeldetag: 18.08.2021
(51) Int. Cl.: F17C 13/10

(54) **VERFAHREN ZUM EISFREIHALTEN ODER AUFTAUEN MINDESTENS EINER VEREISUNGSGEFÄHRDETEN OBERFLÄCHE EINER TANKSCHNITTSTELLE, TANKSCHNITTSTELLE**
METHOD FOR KEEPING FREE OF ICE, OR FOR THAWING, AT LEAST ONE SURFACE, WHICH IS AT RISK OF ICING UP, OF A TANK INTERFACE, AND TANK INTERFACE
PROCÉDÉ POUR MAINTENIR LIBRE DE GLACE, OU POUR DÉGELER, AU MOINS UNE SURFACE, QUI PRÉSENTE UN RISQUE DE GIVRAGE, D'UNE INTERFACE DE RÉSERVOIR, ET INTERFACE DE RÉSERVOIR

(30) Priorität: 25.09.2020 DE 102020212080
(43) Veröffentlichungstag der Anmeldung: 02.08.2023
(73) Patentinhaber: Robert Bosch GmbH, 70442 Stuttgart (DE)
(72) Erfinder: KEMMER, Helerson, 71665 Vaihingen (DE); HELLMANN, Mark, 70825 Korntal (DE); RINK, Matthias, 71083 Herrenberg (DE)
(86) Internationale Anmeldenummer: PCT/EP2021/072892
(87) Internationale Veröffentlichungsnummer: WO 2022/063490

(56) Entgegenhaltungen:
- DE-C2- 4 041 337
- JP-A- 2011 179 519
- US-A1- 2004 016 240
- US-A1- 2013 061 983
- US-A1- 2018 266 633

## Beschreibung

Die Erfindung betrifft ein Verfahren zum Eisfreihalten oder Auftauen mindestens einer vereisungsgefährdeten Oberfläche einer Tankschnittstelle gemäß dem Oberbegriff des Anspruchs 1. Die Erfindung betrifft ferner eine Tankschnittstelle mit mindestens einer vereisungsgefährdeten Oberfläche, die an einer Tankpistole und/oder an einem Tankstutzen eines mit Wasserstoff betreibbaren Fahrzeugs ausgebildet ist.

### Stand der Technik

Wasserstoff betriebenen Brennstoffzellensysteme wird großes Potenzial nachgesagt, eine maßgebliche Rolle bei der Energie- und Verkehrswende zu spielen. Erste Serienanwendungen sind bereits auf dem Markt verfügbar.

In mobilen Anwendungen muss Wasserstoff in einem Speicher bzw. Tank mitgeführt werden. Grundsätzlich kann Wasserstoff tiefkalt in einem sogenannten Kryotank oder unter Druck in einem Drucktank gespeichert werden. Für mobile Anwendungen und solche, bei denen nicht sichergestellt ist, dass kontinuierlich Wasserstoff entnommen wird, stellen Drucktanks die Vorzugslösung dar. Der Speicherdruck in diesen Drucktanks kann bis zu 700 bar betragen.

Nach Verbrauch des gespeicherten Wasserstoffs, müssen die Tanks neu befüllt werden. Ein mit Wasserstoff betriebenes Fahrzeug fährt hierzu eine Wasserstoff-Tankstelle an. Die Betankung erfolgt mit Hilfe einer Tankpistole und eines entsprechenden Tankstutzens des Fahrzeugs. Diese Schnittstelle ist international standardisiert, wobei der Standard im Protokoll SAE J2601 festgelegt ist. Da sich Wasserstoff aufgrund seiner thermodynamischen Eigenschaften während eines Betankungsvorgangs erwärmt, wird er in der Tankstelle bei etwa -40°C gespeichert. Beim Betanken eines Fahrzeugs können daher die von dem kalten Wasserstoff durchströmten Bereiche, insbesondere Ventile, Rohre und/oder Verbindungen, so stark abkühlen, dass sie einfrieren. Hinzu kommt, dass Umgebungsfeuchte sich an der Tankpistole als Kondensat niederschlagen kann, das dann gefriert. Während des Betankungsvorgangs kann es somit zu einem Festfrieren der Tankpistole am Tankstutzen kommen. Die Gefahr des Festfrierens ist besonders hoch, wenn das Betanken des Fahrzeugs in warmer, feuchter Umgebung erfolgt. Schnell hintereinander durchgeführte Betankungsvorgänge erhöhen ebenfalls die Gefahr, da die Tankpistole keine Zeit hat, sich zu erwärmen. Die US 2018/266633 A1 und US 2013/061983 A1 beschreiben jeweils ein Fahrzeug und ein Verfahren zum Befüllen von Brenngas mit einer Heizvorrichtung für die Tankpistole. US 2004/016240 A1 beschreibt eine Tankpistole mit einer Schutzkappe aus PTFE.

Da ein Festfrieren der Tankpistole am Tankstutzen zu verlängerten Betankungszeiten führt, liegt der vorliegenden Erfindung die Aufgabe zugrunde, das Festfrieren zu verhindern oder zumindest zu erschweren.

Zur Lösung der Aufgabe werden das Verfahren mit den Merkmalen des Anspruchs 1 sowie die Tankschnittstelle mit den Merkmalen des Anspruchs 4 angegeben. Vorteilhafte Weiterbildungen der Erfindung sind den jeweiligen Unteransprüchen zu entnehmen. Darüber hinaus wird ein mit Wasserstoff betreibbares Fahrzeug mit einer erfindungsgemäßen Tankschnittstelle angegeben.

### Offenbarung der Erfindung

Vorgeschlagen wird ein Verfahren zum Eisfreihalten oder Auftauen mindestens einer vereisungsgefährdeten Oberfläche einer Tankschnittstelle. Die mindestens eine vereisungsgefährdete Oberfläche ist dabei an einer Tankpistole und/oder an einem Tankstutzen eines mit Wasserstoff betreibbaren Fahrzeugs ausgebildet. Erfindungsgemäß wird während eines Betankungsvorgangs und/oder nach einem Betankungsvorgang die mindestens eine vereisungsgefährdete Oberfläche beheizt.

Durch Beheizen der mindestens einen vereisungsgefährdeten Oberfläche kann einem Vereisen der Tankschnittstelle aktiv entgegengewirkt werden, so dass es entweder gar nicht erst zu einem Vereisen kommt oder, falls doch, die vereiste Stelle schnell aufgetaut werden kann. Wird die Beheizung der mindestens einen vereisungsgefährdeten Oberfläche während des Betankungsvorgangs durchgeführt, kann ein Festfrieren der Tankpistole am Tankstutzen verhindert werden. Alternativ oder ergänzend kann die Beheizung auch nach dem Betankungsvorgang durchgeführt werden, so dass der Bildung von Kondensat insbesondere an der Tankpistole entgegengewirkt wird. Auf diese Weise kann bei schnell aufeinanderfolgenden Betankungsvorgängen ein Festfrieren der Tankpistole am Tankstutzen des nachfolgenden Fahrzeugs verhindert werden.

Die Tankpistole bildet die tankstellenseitige Schnittstelle zum Betanken eines Fahrzeugs mit Wasserstoff aus. Der Tankstutzen bildet die entsprechende Schnittstelle am Fahrzeug aus. Der Begriff "Tankschnittstelle" kann sich somit auf die Tankpistole und/oder auf den Tankstutzen beziehen.

Beim Betanken eines mit Wasserstoff betreibbaren Fahrzeugs strömt kalter Wasserstoff über die Tankpistole und den Tankstutzen in einen Tank des Fahrzeugs. Sowohl die Tankpistole, als auch der Tankstutzen können somit mindestens eine vereisungsgefährdete Oberfläche ausbilden. Das erfindungsgemäße Verfahren kann somit dazu eingesetzt werden, die Tankpistole und/oder den Tankstutzen eisfrei zu halten.

Gemäß einer bevorzugten Ausführungsform der Erfindung wird die mindestens eine vereisungsgefährdete Oberfläche mit Hilfe einer Heizpatrone oder einer Heizmanschette beheizt. Diese Heizeinrichtungen benötigen wenig Bauraum und können somit auch auf engem Raum verbaut werden. Darüber hinaus sind sie sehr robust. Die Heizmanschette eignet sich insbesondere zum Beheizen einer Außen- oder Innenumfangsfläche der Tankpistole und/oder des Tankstutzens.

Erfindungsgemäß wird mindestens eine vereisungsgefährdete Oberfläche induktiv beheizt. Diese Art der Beheizung bietet sich an, da in der Regel die Tankpistole und/oder der Tankstutzen im Bereich ihrer vereisungsgefährdeten Oberflächen aus Metall und damit aus einem elektrisch leitfähigen Material gefertigt sind. Eine induktive Heizeinrichtung benötigt ebenfalls wenig Raum und kann zudem einfach und kostengünstig umgesetzt werden.

Es können auch mehrere Heizmethoden kombiniert werden, insbesondere, wenn mehrere vereisungsgefährdete Oberflächen an der Tankpistole und/oder am Tankstutzen beheizt werden.

Die darüber hinaus zur Lösung der eingangs genannten Aufgabe vorgeschlagene Tankschnittstelle weist mindestens eine vereisungsgefährdete Oberfläche auf, die an einer Tankpistole und/oder an einem Tankstutzen eines mit Wasserstoff betreibbaren Fahrzeugs ausgebildet ist. Der Begriff "Tankschnittstelle" kann sich wiederum auf die Tankpistole als tankstellenseitige Schnittstelle und/oder auf den Tankstutzen als fahrzeugseitige Schnittstelle beziehen. Erfindungsgemäß ist die mindestens eine vereisungsgefährdete Oberfläche mittels einer Heizeinrichtung beheizbar und/oder derart beschaffen, dass Wasser gezielt abgeführt, aufgenommen oder adsorbiert wird.

Mit Hilfe der Heizeinrichtung kann im Bedarfsfall die mindestens eine vereisungsgefährdete Oberfläche beheizt werden, so dass ein Festfrieren der Tankpistole am Tankstutzen verhindert oder Eis, das sich im Bereich der Tankschnittstelle bereits gebildet hat, aufgetaut wird. Ferner kann mit Hilfe der Heizeinrichtung, insbesondere, wenn sie dem Beheizen der Tankpistole dient, der Kondensatbildung entgegengewirkt werden. Dies trägt ebenfalls dazu bei, dass das Risiko eines Festfrierens an einem Tankstutzen minimiert wird.

Die Heizeinrichtung kann beispielsweise eine Heizpatrone oder eine Heizmanschette sein. Die Heizmanschette kann insbesondere zum Beheizen einer Außen- oder Innenumfangsfläche der Tankpistole und/oder des Tankstutzens eingesetzt werden. Alternativ oder ergänzend wird vorgeschlagen, dass die Heizeinrichtung eine induktive Heizung ist.

Sofern eine Heizeinrichtung vorgesehen ist, kann mit Hilfe der vorgeschlagenen Tankschnittstelle das zuvor beschriebene erfindungsgemäße Verfahren durchgeführt werden. Die erfindungsgemäße Tankschnittstelle muss jedoch nicht zwingend eine Heizeinrichtung aufweisen.

Die alternativ oder ergänzend vorgeschlagene Maßnahme sieht eine besondere Beschaffenheit der mindestens einen vereisungsgefährdeten Oberfläche vor. Diese zeichnet sich dadurch aus, dass sie Wasser, insbesondere Kondensat, aus dem vereisungsgefährdeten Bereich entfernt. Das Entfernen von Wasser wird dabei passiv, das heißt allein über die Beschaffenheit der Oberfläche bewirkt. Das Vereisungsrisiko wird auf diese Weise ebenfalls minimiert.

Das Entfernen von Wasser kann insbesondere mit einer hydrophilen oder hydrophoben Oberfläche erreicht werden. Zur Ausbildung einer hydrophilen Oberfläche, die Wasser aufnimmt, kann die Oberfläche Kapillare aufweisen. Das über die Kapillare aufgenommene Wasser kann dann an einer unkritischen Stelle wieder abgegeben werden. Zur Ausbildung einer hydrophoben Oberfläche, die Wasser abstößt, kann die Oberfläche entweder selbst hydrophob ausgebildet sein oder eine hydrophobierende Beschichtung aufweisen.

Gemäß der Erfindung weist daher die mindestens eine vereisungsgefährdete Oberfläche eine hydrophobierende Beschichtung, beispielsweise aus Polytetrafluorethylen (PTFE), auf. PTFE, auch unter dem Markennamen "Teflon" bekannt, besitzt eine geringe Oberflächenspannung, so dass Wasser auf der Oberfläche nicht haften bleibt, sondern "abperlt". Der Kontaktwinkel mit Wasser beträgt 126°.

Ergänzend wird vorgeschlagen, dass die mindestens eine vereisungsgefährdete Oberfläche eine Nanobeschichtung aufweist. Mit Hilfe einer solchen Beschichtung kann die Benetzbarkeit der Oberfläche ebenfalls stark herabgesetzt werden.

Ferner ergänzend kann die mindestens eine vereisungsgefährdete Oberfläche eine Zeolithschicht aufweisen, die in einer exothermen Reaktion Wasser adsorbiert. Zum Einen wird auf diese Weise das Wasser von der Oberfläche entfernt, zum Anderen wird durch die exotherme Reaktion Wärme erzeugt, die einer Vereisung entgegenwirkt.

Die vorgeschlagenen Maßnahmen zur Beeinflussung der Beschaffenheit der mindestens einen vereisungsgefährdeten Oberfläche können jeweils allein oder in unterschiedlichen Kombinationen durchgeführt bzw. realisiert werden. Dies gilt im Besonderen, da in der Regel mehrere Oberflächen einer Tankschnittstelle vereisungsgefährdet sind. Die mehreren Oberflächen können somit gleiche oder unterschiedliche Oberflächenbeschaffenheiten aufweisen.

Die mindestens eine vereisungsgefährdete Oberfläche kann insbesondere stirn- und/oder außenumfangseitig am Tankstutzen ausgebildet sein. Die Stirnfläche und/oder die Außenumfangsfläche des Tankstutzens bildet bzw. bilden in der Regel die Kontaktfläche bzw. -flächen mit der Tankpistole während eines Betankungsvorgangs aus, so dass hier die vorgeschlagenen Maßnahmen gegen ein Festfrieren der Tankpistole am Tankstutzen besonders wirkungsvoll sind.

Alternativ oder ergänzend wird vorgeschlagen, dass die mindestens eine vereisungsgefährdete Oberfläche stirn- und/oder innenumfangseitig an der Tankpistole ausgebildet ist. Die Stirn- und/oder Innenumfangsfläche der Tankpistole gelangt bzw. gelangen in der Regel in Kontakt mit dem Tankstutzen.

Die mindestens eine vereisungsgefährdete Oberfläche muss nicht zwingen eben ausgeführt sein. Im Fall einer Außen- oder Innenumfangsfläche kann sie insbesondere bogen- bzw. kreisbogenförmig verlaufen. Sie kann ferner Nuten und/oder Passungen aufweisen. Randseitig kann die Oberfläche gefast oder gerundet sein.

Da der bevorzugte Anwendungsbereich des Tankstutzens der erfindungsgemäßen Tankschnittstelle ein mit Wasserstoff betreibbares Fahrzeug ist, wird ferner ein solches Fahrzeug mit einer erfindungsgemäßen Tankschnittstelle vorgeschlagen.

Die Erfindung wird nachfolgend anhand der beigefügten Zeichnungen näher erläutert. Diese zeigen:
Fig. 1 eine schematische Draufsicht auf einen Tankstutzen einer erfindungsgemäßen Tankschnittstelle,
Fig. 2 eine perspektivische Darstellung des Tankstutzens der Fig. 1 und
Fig. 3 eine perspektivische Darstellung einer Tankpistole einer erfindungsgemäßen Tankschnittstelle.

### Ausführliche Beschreibung der Zeichnungen

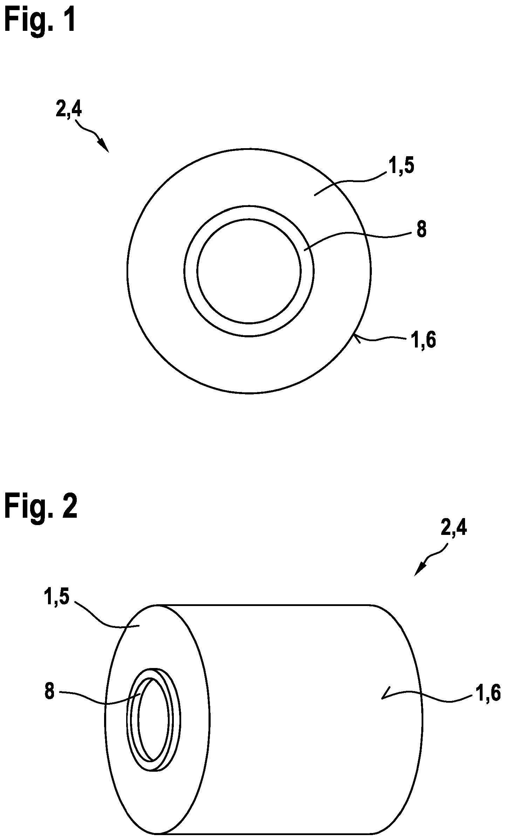

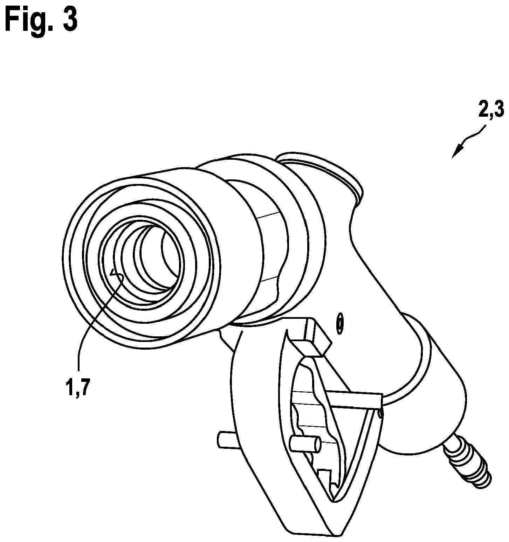

Die Figuren 1 und 2 zeigen beispielhaft einen Tankstutzen 4 eines mit Wasserstoff betreibbaren Fahrzeugs (nicht dargestellt). Der Tankstutzen 4 ist vorliegend hohlzylinderförmig ausgeführt. Er weist eine ebene Stirnfläche 5 mit einer Dichtung 8 sowie eine Außenumfangsfläche 6 auf. Zumindest die Außenumfangsfläche 6 gelangt bei einem Betankungsvorgang in Kontakt mit einer Tankpistole 3. Eine solche Tankpistole 3 ist beispielhaft in der Fig. 3 dargestellt.

Wie der Fig. 3 zu entnehmen ist, weist die Tankpistole 3 eine Art Rüssel auf, der zum Betanken eines mit Wasserstoff betreibbaren Fahrzeugs allerdings nicht in, sondern auf den Tankstutzen 4 des Fahrzeugs gesteckt wird, so dass Wasserstoff über die Tankpistole 3 und den Tankstutzen 4 in einen Tank (nicht dargestellt) des Fahrzeugs strömen kann.

Bei aufgesteckter Tankpistole 3 gelangt eine Innenumfangsfläche 7 der Tankpistole 3 in Kontakt mit der Außenumfangsfläche 6 des Tankstutzens 4. Die Kontaktflächen bilden jeweils vereisungsgefährdete Oberflächen 1 aus, da sie beim Betanken des Fahrzeugs mit Wasserstoff stark abkühlen. Denn die Temperatur des Wasserstoffs beträgt etwa -40°C. Schlägt sich an den abgekühlten Oberflächen zudem Kondensat nieder, kann dieses gefrieren. Dies kann dazu führen, dass die Tankpistole 3 an dem Tankstutzen 4 festfriert.

Auch nach einem Betankungsvorgang kann sich an den kalten Oberflächen Kondensat niederschlagen, insbesondere, wenn die Luft der Umgebung warm und feucht ist. Folgt kurz darauf ein neuer Betankungsvorgang, kann die Tankpistole 3 an dem Tankstutzen 4 des weiteren Fahrzeugs festfrieren.

Gemäß dem erfindungsgemäßen Verfahren wird daher die mindestens eine vereisungsgefährdete Oberfläche 1 einer Tankschnittstelle 2 beheizt. Durch Beheizen kann ein zu starkes Abkühlen der Oberfläche verhindert werden, so dass sich auf dieser kein Kondensat niederschlägt oder dieses zumindest nicht gefriert.

Eine erfindungsgemäße Tankschnittstelle 2 weist daher zur Durchführung des erfindungsgemäßen Verfahrens eine Heizeinrichtung (nicht dargestellt) auf. Alternativ oder ergänzend kann die mindestens eine vereisungsgefährdete Oberfläche 1 eine Beschaffenheit aufweisen, die Wasser abführt, aufnimmt oder adsorbiert. Beispielsweise kann Wasser über in der Oberfläche 1 vorhandene Kapillare aufgenommen und somit aus dem Gefahrenbereich entfernt werden. Es kann auch eine Beschichtung (nicht dargestellt) auf die Oberfläche 1 aufgebracht werden, die vorzugsweise hydrophobierend wirkt, so dass Wasser von der Oberfläche 1 einfach abperlt. Die Adsorption von Wasser kann mittels einer Zeolithschicht in der Oberfläche 1 bewirkt werden. Die Adsorption mittels einer Zeolithschicht besitzt den Vorteil, dass dieser Vorgang exotherm ist, das heißt Wärme freisetzt, die wiederum zum Beheizen der Oberfläche genutzt werden kann.

## Patentansprüche

1. Verfahren zum Eisfreihalten oder Auftauen mindestens einer vereisungsgefährdeten Oberfläche (1) einer Tankschnittstelle (2), wobei die mindestens eine vereisungsgefährdete Oberfläche (1) an einer Tankpistole (3) und/oder an einem Tankstutzen (4) eines mit Wasserstoff betreibbaren Fahrzeugs ausgebildet ist, wobei während eines Betankungsvorgangs und/oder nach einem Betankungsvorgang die mindestens eine vereisungsgefährdete Oberfläche (1) beheizt wird, **dadurch gekennzeichnet, dass** die mindestens eine vereisungsgefährdete Oberfläche (1) induktiv beheizt wird.

2. Verfahren nach Anspruch 1,
**dadurch gekennzeichnet, dass** die mindestens eine vereisungsgefährdete Oberfläche (1) mit Hilfe einer Heizpatrone oder einer Heizmanschette beheizt wird.

3. Tankschnittstelle (2) mit mindestens einer vereisungsgefährdeten Oberfläche (1), die an einer Tankpistole (3) und/oder an einem Tankstutzen (4) eines mit Wasserstoff betreibbaren Fahrzeugs ausgebildet ist, wobei die mindestens eine vereisungsgefährdete Oberfläche (1) mittels einer Heizeinrichtung beheizbar ist und/oder derart beschaffen ist, dass Wasser gezielt abgeführt, aufgenommen oder adsorbiert wird, **dadurch gekennzeichnet, dass** die mindestens eine vereisungsgefährdete Oberfläche (1) eine hydrophobierende Beschichtung, beispielsweise aus Polytetrafluorethylen (PTFE), aufweist.

4. Tankschnittstelle (2) nach Anspruch 3,
**dadurch gekennzeichnet, dass** die mindestens eine vereisungsgefährdete Oberfläche (1) eine Nanobeschichtung aufweist.

5. Tankschnittstelle (2) nach einem der Ansprüche 3 oder 4,
**dadurch gekennzeichnet, dass** die mindestens eine vereisungsgefährdete Oberfläche (1) eine Zeolithschicht aufweist, die in einer exothermen Reaktion Wasser adsorbiert.

6. Tankschnittstelle (2) nach einem der Ansprüche 3 bis 5,
**dadurch gekennzeichnet, dass** die mindestens eine vereisungsgefährdete Oberfläche (1) stirn- und/oder außenumfangseitig am Tankstutzen (4) ausgebildet ist.

7. Tankschnittstelle (2) nach einem der Ansprüche 3 bis 6,
**dadurch gekennzeichnet, dass** die mindestens eine vereisungsgefährdete Oberfläche (1) stirn- und/oder innenumfangseitig an der Tankpistole (3) ausgebildet ist.

8. Mit Wasserstoff betreibbares Fahrzeug mit einer Tankschnittstelle (2) nach einem der Ansprüche 3 bis 7.

## Claims

1. Method for keeping free of ice, or thawing, at least one surface (1) at risk of icing up of a tank interface (2), wherein the at least one surface (1) at risk of icing up is provided on a fuelling nozzle (3) and/or on a filler neck (4) of a hydrogen-operated vehicle, wherein the at least one surface (1) at risk of icing up is heated during a fuelling process and/or after a fuelling process, **characterized in that** the at least one surface (1) at risk of icing up is inductively heated.

2. Method according to Claim 1,
**characterized in that** the at least one surface (1) at risk of icing up is heated using a heating cartridge or a heating sleeve.

3. Tank interface (2) having at least one surface (1) which is at risk of icing up and is provided on a fuelling nozzle (3) and/or on a filler neck (4) of a hydrogen-operated vehicle,
wherein the at least one surface (1) at risk of icing up can be heated by means of a heating device and/or is provided in such a way that water is discharged, absorbed or adsorbed in controlled fashion, **characterized in that** the at least one surface (1) at risk of icing up has a hydrophobizing coating, for example of polytetrafluoroethylene (PTFE).

4. Tank interface (2) according to Claim 3,
**characterized in that** the at least one surface (1) at risk of icing up has a nano-coating.

5. Tank interface (2) according to either of Claims 3 and 4,
**characterized in that** the at least one surface (1) at risk of icing up has a zeolite layer, which adsorbs water in an exothermic reaction.

6. Tank interface (2) according to one of Claims 3 to 5,
**characterized in that** the at least one surface (1) at risk of icing up is provided on the end face and/or around the outer circumference of the filler neck (4).

7. Tank interface (2) according to one of Claims 3 to 6,
**characterized in that** the at least one surface (1) at risk of icing up is provided on the end face and/or around the inner circumference of the fuelling nozzle (3).

8. Hydrogen-operated vehicle comprising a tank interface (2) according to one of Claims 3 to 7.

## Revendications

1. Procédé pour dégivrer ou dégeler au moins une surface (1) sujette au givrage d'une interface de réservoir (2), l'au moins une surface (1) sujette au givrage étant réalisée sur un pistolet de réservoir (3) et/ou sur une tubulure de réservoir (4) d'un véhicule pouvant fonctionner à l'hydrogène, l'au moins une surface (1) sujette au givrage étant chauffée pendant une opération de ravitaillement et/ou après une opération de ravitaillement, **caractérisé en ce que** l'au moins une surface (1) sujette au givrage est chauffée par induction.

2. Procédé selon la revendication 1,
**caractérisé en ce que** l'au moins une surface (1) sujette au givrage est chauffée à l'aide d'une cartouche de chauffage ou d'un manchon de chauffage.

3. Interface de réservoir (2) avec au moins une surface (1) sujette au givrage, réalisée sur un pistolet de réservoir (3) et/ou sur une tubulure de réservoir (4) d'un véhicule pouvant fonctionner à l'hydrogène,
l'au moins une surface (1) sujette au givrage pouvant être chauffée au moyen d'un dispositif de chauffage et/ou étant conçue de telle sorte que l'eau est évacuée, absorbée ou adsorbée de manière ciblée, **caractérisée en ce que** l'au moins une surface (1) sujette au givrage présente un revêtement hydrophobe, par exemple en polytétrafluoroéthylène (PTFE).

4. Interface de réservoir (2) selon la revendication 3,
**caractérisée en ce que** l'au moins une surface (1) sujette au givrage présente un nano-revêtement.

5. Interface de réservoir (2) selon l'une quelconque des revendications 3 ou 4,
**caractérisée en ce que** l'au moins une surface (1) sujette au givrage présente une couche de zéolite qui adsorbe l'eau dans une réaction exothermique.

6. Interface de réservoir (2) selon l'une quelconque des revendications 3 à 5,
**caractérisée en ce que** l'au moins une surface (1) sujette au givrage est réalisée sur le côté frontal et/ou sur le côté périphérique extérieur de la tubulure de réservoir (4).

7. Interface de réservoir (2) selon l'une quelconque des revendications 3 à 6,
**caractérisée en ce que** l'au moins une surface (1) sujette au givrage est réalisée sur le côté frontal et/ou sur le côté périphérique intérieur du pistolet de réservoir (3).

8. Véhicule pouvant fonctionner à l'hydrogène avec une interface de réservoir (2) selon l'une quelconque des revendications 3 à 7.
